Europäisches Patentamt

European Patent Office

Office européen des brevets

(11) Veröffentlichungsnummer: **0 049 336**
**B1**

(12) **EUROPÄISCHE PATENTSCHRIFT**

(45) Veröffentlichungstag der Patentschrift: 03.04.85

(21) Anmeldenummer: 81105720.7

(22) Anmeldetag: 21.07.81

(51) Int. Cl.⁴: **B 60 G 15/06, F 16 F 9/54**

(54) **Entkoppeltes elastisches Lager für die karosserieseitige Befestigung einer Radaufhängung.**

(30) Priorität: 08.10.80 DE 8026889 u

(43) Veröffentlichungstag der Anmeldung:
14.04.82 Patentblatt 82/15

(45) Bekanntmachung des Hinweises auf die
Patenterteilung:
03.04.85 Patentblatt 85/14

(84) Benannte Vertragsstaaten:
BE FR GB IT NL SE

(56) Entgegenhaltungen:
DE-A-2 820 585
DE-A-2 946 516
DE-U-7 540 560
FR-A-2 225 647
FR-A-2 229 566
FR-A-2 401 787
US-A-4 260 177

(73) Patentinhaber: Boge GmbH
Bogestrasse 50
D-5208 Eitorf/Sieg (DE)

(72) Erfinder: Mayerböck, Wilhelm
Felix-Blass-Strasse 2
D-5483 Kirchdaun (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein entkoppeltes elastisches Lager für die karosserieseitige Befestigung einer Radaufhängung an einem Teleskopschwingungsdämpfer, der koaxial von einer Schraubenfeder umgeben ist, wobei das Lager einen Ringflansch aufweist, der an seinem inneren Rand einen zur Drehachse gerichteten umlaufenden Hohlwulst besitzt, gegen dessen Erhöhung ein Ring aus elastomerem Material eingeknüpft ist, welcher koaxial um ein Ende des Teleskopschwingungsdämpfers befestigt ist, und wobei der Ring einen Flansch zur Einleitung der Kraft der Schraubenfeder aufweist, der sich unterhalb des Ringflansches erstreckt.

Aus dem DE—GM—75 40 560 ist ein Lager der vorstehend beschriebenen Gattung bekannt, bei dem sich der Flansch des Ringes aus Gummi unterhalb des Ringflansches mit einem Durchmesser erstreckt, der dem Durchmesser der Schraubenfeder angepaßt ist. Die Schraubenfeder selbst ist dabei direkt gegen den Flansch des Gummirings abgestützt. Bei dem bauartbedingt großen Durchmesser der Schraubenfeder ist in nachteiliger Weise eine einfache Montage der Radaufhängung mit dem Lager nicht möglich, ohne daß der Ring aus Gummi mit seinem Flansch an dem Ringflansch durch Vulkanisieren angehaftet wird. Dabei bedingen die großen Durchmesser der Teile längere Aufheizzeiten in der Vulkanisierpresse. Bei vorgegebener Formengröße können nur wenige Teile gleichzeitig bearbeitet werden, was die Herstellungskosten besonders ungünstig beeinflußt. Infolge der direkten Anlage eines Endes der Schraubenfeder gegen den Flansch des Ringes aus Gummi besteht die ernste Gefahr, daß dieser beschädigt und somit funktionsuntüchtig gemacht wird, insbesondere wenn das Lager zur Abstützung einer drehbaren Radaufhängung verwendet wird.

Der Erfindung liegt die Aufgabe zugrunde, ein elastisches Lager der eingangs beschriebenen Gattung zu schaffen, welches die Nachteile des bekannten Lagers vermeidet, und insbesondere das Lager in der Herstellung zu verbilligen, die Bearbeitung der Einzelteile zu erleichtern und die Funktionssicherheit des Lagers zu erhöhen.

Diese Aufgabe wird erfindungsgemäß dadurch gelöst, daß der Flansch an dem Ring aus elastomerem Material mit einem kleinen Lagerteller haftend verbunden ist, gegenüber welchem mittels eines Gleitringes, Kugellagers oder dergleichen ein größerer Lagerteller verdrehbar ist, dessen Durchmesser dem Durchmesser der Schraubenfeder entspricht und gegen den ein Ende der Schraubenfeder abgestützt ist.

Bei dem elastischen Lager gemäß der Erfindung wird somit auf besonders vorteilhafte und einfache Weise der Durchmesser des Flansches an dem Ring aus elastomerem Material wesentlich verringert. Es ist deshalb nicht mehr erforderlich, Teile größeren Durchmessers durch beispielsweise Vulkanisieren miteinander zu verbinden. Dabei kann bei vorgegebener Größe der Formen für das Vulkanisieren eine größere Anzahl von Teilen gleichzeitig bei kürzerer Aufheizzeit haftend miteinander verbunden werden. Dadurch, daß die Schraubenfeder nicht mehr direkt an dem elastomerem Material anliegt, wird ein Zerreiben bei einem Verdrehen der Schraubenfeder gegenüber dem Lager vermieden, wodurch dessen Funktionssicherheit und somit Lebensdauer in vorteilhafter Weise verbessert wird. Trotz des gegenüber dem bekannten Lager stark verkleinerten Durchmessers des Flansches an dem Ring aus elastomerem Material bleiben alle Vorteile, nämlich eine entkoppelte Einleitung der Schwingungen der Schraubenfeder und derjenigen der Kolbenstange in den Ringflansch und damit in die Karosserie erhalten.

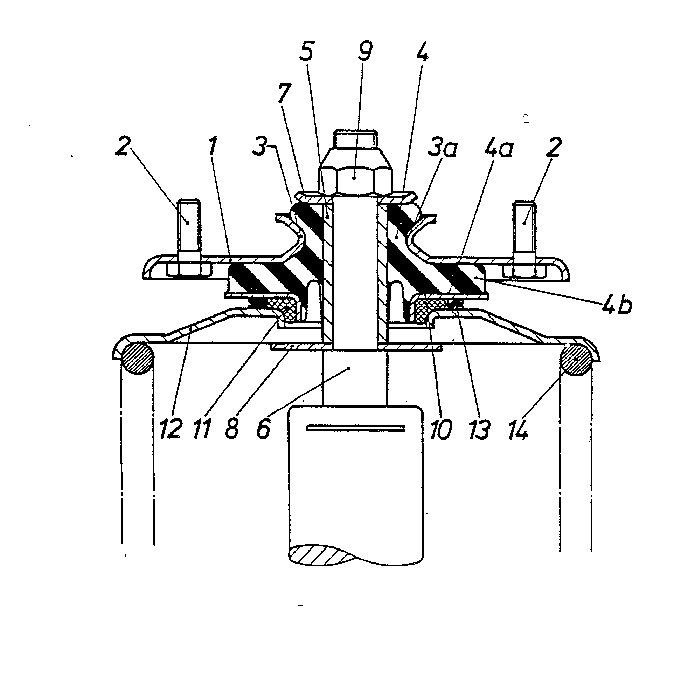

Die Erfindung wird nachstehend anhand eines in der Zeichnung schematisch dargestellten Ausführungsbeispiels näher erläutert. Die Figur zeigt ein Lager gemäß der Neuerung im axialen Längsschnitt.

Ein Ringflansch 1 ist mit Schrauben 2 an einem nicht dargestellten Karosserieteil verschraubt. Der Ringflansch 1 ist innen umgebogen zu einem ringförmigen Hohlwulst 3. Dieser Hohlwulst 3 hält mit seiner Erhöhung 3a einen Ring 4 aus Gummi, der an einer Buchse 5 anvulkanisiert ist. Die Buchse 5 ist mit dem äußeren, abgesetzten Ende einer Kolbenstange 6 zwischen zwei Scheiben 7 und 8 mittels einer Mutter 9 verschraubt.

An der Unterseite 4a eines sich radial nach außen erstreckenden Flansches 4b des Ringes 4 ist ein kleiner Lagerteller 10 anvulkanisiert, der innen ringförmig umgebogen ist. Der kleine Lagerteller 10 bildet zusammen mit einem Gleitring 11 und einem zusätzlichen, außen umgebogenen größeren Lagerteller 12 ein Drehlager. Der Gleitring 11 ist nach außen durch einen zwischen dem kleinen Lagerteller 10 und dem größeren Lagerteller 12 angeordneten Dichtungsring 13 abgedichtet. Der größere Lagerteller 12 bildet das Widerlager für ein Ende einer Schraubenfeder 14, deren anderes Ende in bekannter Weise gegen ein unteres Lager an einer Radaufhängung abgestützt ist (nicht dargestellt).

Durch Veränderung der relativen Abmessungen der Dicke des Flansches 4b, des Durchmessers des Ringes 4 und des Anpreßdruckes bei dessen Einknüpfung im Hohlwulst 3 wird die Dämpfung der Kolbenstangen-Schwingungen unabhängig von den Schraubenfeder-Schwingungen gegenüber dem Ringflansch 1 den unterschiedlichen, fahrzeugabhängigen Anforderungen mit geringem baulichen Aufwand angepaßt.

**Patentanspruch**

1. Entkoppeltes elastisches Lager für die karosserieseitige Befestigung einer Radaufhängung an einem Teleskopschwingungsdämpfer, der koaxial von einer Schraubenfeder (14), umgeben ist, wobei das Lager einen Ringflansch (1) aufweist, der an seinem inneren Rand einen zur Drehachse gerichteten umlaufenden Hohlwulst (3) besitzt, gegen dessen Erhöhung ein Ring (4) aus elastomerem Material eingeknüpft ist, welcher koaxial um ein Ende des Teleskopschwingungsdämpfers befestigt ist, und wobei der Ring (4) einen Flansch (4b) zur Einleitung der Kraft der Schraubenfeder (14) aufweist, der sich unterhalb des Ringflansches (1) erstreckt, dadurch gekennzeichnet, daß der Flansch (4b) an dem Ring (4) aus elastomerem Material mit einem kleinen Lagerteller (10) haftend verbunden ist, gegenüber welchem mittels eines Gleitringes (11), Kugellagers oder dergleichen ein größer Lagerteller (12) verdrehbar ist, dessen Durchmesser dem Durchmesser der Schraubenfeder (14) entspricht und gegen den ein Ende der Schraubenfeder (14) abgestützt ist.

## Revendication

Support ou palier élastique, s'opposant à la transmission des vibrations, pour fixer à la carrosserie une suspension de roue au droit d'un amortisseur téléscopique qui est entouré coaxialement par un ressort hélicoïdal (14), support qui comprend une bride annulaire (1) dont le bord intérieur forme un bourrelet périphérique creux (3) dirigé vers l'axe de rotatation et retenant par un flanc une bague en élastomère (4), la bague étant fixée coaxialement autour d'un bout de l'amortisseur téléscopique et portant un collet (4b), situé sous la bride (1), pour la transmission de la force du ressort hélicoïdal (14), caractérisé en ce que le collet (4b) de la bague en élastomère (4) est fixé par adhérence à un petit disque d'appui (10), par rapport auquel est disposé rotatif, au moyen d'une bague-coussinet (11), d'un roulement à billes ou d'un élément analogue, un disque d'appui (12) plus grand, dont le diamètre correspond au diamètre du ressort hélicoïdal (14) et contre lequel s'appuie une extrémité de ce ressort.

## Claim

1. Self-contained elastic support for mounting a wheel suspension unit on a telescopic vibration damper at the vehicle-body end of the unit, the damper being surrounded by a coil spring (14), and the support comprising an annular flange (1) having on its inner edge a circumferentially extending concave bead (3) directed towards the axis of rotation, over the apex of which bead there is keyed a ring (4) of elastomeric material which is secured co-axially around one end of the damper, the ring (4) having a flange (4b) for taking the load of the coil spring (14) and extending below the annular flange (1), characterised in that, the flange (4b) on the ring (4) of elastomeric material is bonded to a small bearing plate (10), with respect to which a larger bearing plate (12) is rotatable by means of a sliding bearing ring (11), ball bearing or the like, the diameter of the larger plate corresponding to the diameter of the coil spring (14) and being supported against the one end of the coil spring (14).